# EUROPÄISCHE PATENTSCHRIFT

(11) **EP 2 004 303 B1**
(45) Veröffentlichungstag und Bekanntmachung des Hinweises auf die Patenterteilung: **23.05.2012**
(21) Anmeldenummer: 07724121.4
(22) Anmeldetag: 10.04.2007
(51) Int. Cl.: B01D 39/16, A47L 9/14

(54) **FILTERBEUTEL FÜR EINEN STAUBSAUGER**
FILTER BAG FOR A VACUUM CLEANER
SAC A FILTRE POUR ASPIRATEUR

(30) Priorität: 13.04.2006 DE 102006017553
(43) Veröffentlichungstag der Anmeldung: 24.12.2008
(73) Patentinhaber: Eurofilters N.V., 3900 Overpelt (BE)
(72) Erfinder: SCHULTINK, Jan, 3900 Overpelt (BE); SAUER, Ralf, 3900 Overpelt (BE)
(74) Vertreter: Pfenning, Meinig & Partner GbR
(86) Internationale Anmeldenummer: PCT/EP2007/003180
(87) Internationale Veröffentlichungsnummer: WO 2007/118640

(56) Entgegenhaltungen:
- EP-A- 1 197 252
- WO-A-2004/027135
- DE-U1-202005 018 003
- GB-A- 1 481 666
- US-A1- 2003 203 694

## Beschreibung

Die vorliegende Erfindung betrifft einen Filterbeutel für einen Staubsauger aus einem Verbundmaterial umfassend mindestens drei Lagen, wobei mindestens zwei Lagen, die aus einer Vliesstofflage und mindestens einer Faservlieslage bestehen, durch eine Schweißverbindung verbunden sind. Die Erfindung betrifft weiterhin die Verwendung eines derartigen Filterbeutels.

In den letzten Jahren sind zahlreiche Entwicklungen bekannt geworden, die sich damit beschäftigen, die seit langer Zeit im Stand der Technik bekannten Filtermaterialien aus ein- oder mehrlagigen Papieren bzw. Geweben zu ersetzen. So sind in der EP 1 258 277 B1 und der EP 0 960 645 B1 Staubfilterbeutel beschrieben, bei denen als Filtermaterial ein Verbund aus Non-Woven-Materialien eingesetzt wird. Der Verbund besteht dabei aus mindestens zwei Schichten, wobei diese Schichten unterschiedliche Filtrationseigenschaften aufweisen.

Weiterhin ist in der EP 1 197 252 A1 ein Filtermedium aus Non-Woven-Material beschrieben, bei dem elektrostatisch geladenen Splitfasern durch eine Ultraschallschweißverbindung zu einem verfestigten Vlies aus Non-Woven-Material verbunden sind. Um dem Schichtmaterial auch eine entsprechende Stabilität zu verleihen, ist dabei vorgesehen, dass bezogen auf die gesamte Oberfläche des Filtermaterials mindestens 5 % der Oberfläche mit Schweißpunkten versehen sind und dass mindestens zwei Schweißpunkte pro cm² vorliegen. Dadurch wird erreicht, dass die einzelnen Fasern direkt miteinander durch Ultraschallschweißen verbunden sind. Als Vorteil eines derartigen Filtermediums wird genannt, dass die Herstellungskosten gegenüber einem Nadelverfahren deutlich geringer sind und dass dadurch eine Gleichmäßigkeit hergestellt wird, so dass eine Verbesserung gegenüber denjenigen Filtermedien erreicht wird, die z.B. durch Vernadeln verbunden werden.

In der vorstehend erwähnten europäischen Anmeldung ist weiterhin noch vorgesehen, dass dieses so stabilisierte Filtermedium noch mit weiteren Non-Woven-Schichten verbunden werden kann.

Nachteilig bei dem Filtermedium der EP 1 197 252 A1 ist vor allem, dass das Staubspeichervermögen gegenüber Hausstaub nur unzureichend ist.

Weiterhin ist aus der US 5,900,305 ein elektrostatisches Filtermedium bekannt, das aus 2 bis 20 Meltblown-Lagen (Feinstfaservliesstofflagen) besteht. Die Meltblown-Lagen werden dabei durch Schweißverbindungen miteinander verbunden. Ungünstig bei dem Filtermedium nach der US 5,900,305 ist, dass es für den Einsatz in Staubfilterbeuteln, bei denen das auszufilternde Medium in den unterschiedlichsten Partikelgrößen vorliegt, kein hinreichendes Staubspeichervermögen aufweist.

Ausgehend hiervon ist es die Aufgabe der vorliegenden Erfindung, einen Filterbeutel anzugeben, dessen Filtermaterial im Vergleich zu denen, die im Stand der Technik beschrieben sind, eine deutlich höheres Staubspeichervermögen aufweist und wobei gleichzeitig ein möglichst geringer Druckverlust vorliegt.

Die Aufgabe wird durch die Merkmale des Patentanspruchs 1 gelöst. Die Unteransprüche zeigen vorteilhafte Weiterbildungen auf.

Erfindungsgemäß wird somit ein Filterbeutel für einen Staubsauger vorgeschlagen, der aus einem Filtermaterial besteht, das mindestens drei Lagen umfasst, wobei mindestens zwei Lagen, die aus mindestens einer Vliesstofflage und mindestens einer Faservlieslage bestehen, durch eine Schweißverbindung verbunden sind. Beim Filterbeutel nach der Erfindung ist weiterhin gefordert, dass die als Faservlieslage bezeichnete Lage Filamente und/oder fibrillierte Folienfasern (Splitfasern) und/oder Crimpfasern umfasst, wobei alle Fasern der Faservlieslage ungeladen sind, und wobei der Pressflächenanteil des Schweißmusters maximal 5 % der Oberfläche der durchströmbaren Fläche des Filterbeutels beträgt. Weiterhin ist vorgesehen, dass durchschnittlich auf die gesamte durchströmbare Fläche bezogen mindestens 20 Schweißverbindungen pro 10 cm² vorhanden sind.

Wesentlich beim Gegenstand der vorliegenden Erfindung ist, dass das Filtermaterial des erfindungsgemäßen Filterbeutels neben einer weiteren Lage einen Verbund enthält, der aus mindestens zwei unterschiedlichen Lagen besteht, nämlich aus mindestens einer Faservlieslage und mindestens einer Vliesstofflage.

Unter einer Faservlieslage im Sinne der Erfindung wird dabei eine Lage verstanden, die aus lose abgelegten Fasern bzw. Filamenten besteht. Die Verfahren zum Ablegen von Fasern sind aus dem Stand der Technik der Vliesstoffe bekannt. Bei der Vliesstoffherstellung werden die Hauptprozessstufen Rohstoffaufbereitung, Vliesbildung, Vliesverfestigung, Vliesstoffveredelung durchlaufen. Der bei der Vliesbildung erzeugte lockere, noch ungebundene Faserflor wird dabei als Faservlies (Web) bezeichnet (siehe Vliesstoffe W. Albrecht, H. Fuchs, W. Kittelmann, Wiley VCH, 2000). Durch den Vliesbindeschritt entsteht aus dem Faservlies der Vliesstoff, der eine ausreichende Festigkeit aufweist, um z.B. zu Rollen aufgewickelt zu werden. Dieser letztgenannte Schritt erfolgt somit bei der Herstellung der Faservlieslage nach der Erfindung nicht, stattdessen wird das Faservlies an eine Vliesstofflage gebunden.

Aus stofflicher Sicht umfasst die Faservlieslage der Erfindung die mit der Vliesstofflage in einem Verbund vorliegt, alle an und für sich im Stand der Technik bekannten Stapelfasern und/oder Filamente. Unter Stapelfasern im Sinne der Erfindung werden auch fibrillierte Folienfasern (Splitfasern) und Crimpfasern verstanden. Wesentlich ist dabei, dass gemäß der vorliegenden Erfindung zumindest die Splitfasern nicht geladen sind. Die Erfinder konnten zeigen, dass auch dann, wenn alle Fasern der Faservlieslage nicht geladen sind, immer noch ausgezeichnete Eigenschaften in Bezug auf das Staubspeichervermögen erreicht werden.

Als Crimpfasern haben sich gemäß der vorliegenden Erfindung besonders diejenigen als günstig erwiesen, die eine räumliche Struktur aufweisen, wie z.B. eine Zick-Zack-, Wellen- und/oder eine Spiralstruktur. Der Vorteil derartiger Fasern ist darin zu sehen, dass sie die Bauschigkeit des Mediums noch deutlich erhöhen.

Die Crimpfaser kann eine mechanisch gecrimpte, eine Autocrimpfaser und/oder eine Bikomponentencrimpfaser sein. Autocrimpfasern sind z.B. in dem EP-Patent 0 854 943 sowie in der WO 01/11119 beschrieben. Bikomponentencrimpfasern können z.B. über Chisso Corporation in Japan und gecrimpte Polyesterstapelfasern vom Spiraltyp bei Gepeco in den Vereinigten Staaten bezogen werden.

Bei der Erfindung können Stapelfasern eingesetzt werden, die aus Naturfasern und/oder Chemiefasern ausgewählt sind. Beispiele für Chemiefasern sind insbesondere Polyolefine und Polyester. Beispiele für Naturfasern sind Cellulose, Holzfasern, Kapok, Flachs.

Die Stapelfasern nach der Erfindung weisen dabei eine Länge zwischen 1 und 100mm, bevorzugt zwischen 3 und 70 mm auf. Die flächenbezogene Masse der erfindungsgemäßen Faservlieslage liegt zwischen 10 und 200 g/m², bevorzugt zwischen 20 bis 100 g/m².

Die Vliesstofflage des erfindungsgemäßen Filterbeutels ist bevorzugt eine Stütz- bzw. Trägerlage und weist eine flächenbezogene Masse von mindestens 5 g/m² auf. Als Vliesstofflage selbst wird günstigerweise ein Scrim verwendet. Unter einem Scrim wird dabei jedes luftdurchlässige Material verstanden, das als Träger- oder Verstärkungsschicht dienen kann. Es kann ein Vliesstoff, ein gewebtes Material oder ein Netting sein. Vorzugsweise besteht es aus einem thermoplastischen Polymer, um die Verschweißbarkeit mit der Faservlieslage zu vereinfachen. Beispiele für Scrims sind Spinnvliese. Es können aber auch trocken-oder naßgelegte Vliesstoffe sein, die eine ausreichende mechanische Stabilität aufweisen. Die flächenbezogene Masse einer derartigen Vliesstofflage liegt gemäß der vorliegenden Erfindung bevorzugt zwischen 10 und 200 g/m², besonders bevorzugt zwischen 20 bis 100 g/m². Die flächenbezogene Masse in g/m² wird dabei nach DIN EN 29073-1 bestimmt.

Der erfindungsgemäße Filterbeutel umfasst mindestens drei Lagen, wobei mindestens zwei Lagen, die aus mindestens einer vorstehend beschriebenen Vliesstofflage und mindestens einer vorstehend beschriebenen Faservlieslage bestehen, durch eine Schweißverbindung verbunden sind. Dabei ist es wesentlich, dass der Pressflächenanteil des Schweißmusters maximal 5 % der Oberfläche der durchströmbaren Fläche des Filterbeutels beträgt und dass bezogen auf die gesamte durchströmbare Fläche des Filterbeutels durchschnittlich mindestens 20 Schweißverbindungen pro 10 cm² vorhanden sind. Besonders bevorzugt ist es dabei, wenn mindestens 25 Schweißverbindungen pro 10 cm², besonders bevorzugt mindestens 50 Schweißverbindungen pro 10 cm² vorhanden sind. Es ist weiterhin günstig, wenn die Schweißverbindungen gleichmäßig über die durchströmbare Fläche des Filterbeutels verteilt sind.

Selbstverständlich ist es auch möglich, dass die Schweißverbindungen nur in einzelnen Bereichen der durchströmbaren Fläche angeordnet sind.

Die Schweißverbindung selbst ist linienförmig ausgebildet. Bei der Geometrie der aufzubringenden Schweißverbindungen ist es dann besonders günstig, wenn eine Anordnung gewählt wird, bei der eine kissenartige Ausbildung vorliegt. Insbesondere durch diese kissenartige Ausbildung, d.h. durch eine linienförmige Aufbringung von Schweißverbindungen in definierten Abständen zueinander kann ein überdurchschnittlich hohes Staubspeichervermögen erreicht werden.

Als gängige Methode für Schweißverbindungen kann gemäß der vorliegenden Erfindung beim Filterbeutel, wie an und für sich im Stand der Technik bekannt, eine Ultraschallschweißverbindung gewählt werden.

Beim Filterbeutel nach der Erfindung ist es dabei weiterhin günstig, wenn der Verbund aus zwei Vliesstofflagen, zwischen denen die Faservlieslage angeordnet ist, besteht. Der Verbund kann auch aus einer Vliesstofflage und einer Feinfaserspinnvlieslage, zwischen denen die Faservliesstofflage angeordnet ist, bestehen. Selbstverständlich ist es möglich, dass der Verbund weitere Feinfaserspinnvlieslagen umfasst. Bevorzugt ist es dabei, wenn die Feinfaserspinnvlieslagen unterschiedliche Filtereigenschaften aufweisen, wobei es für den Staubfilterbeutel günstig ist, wenn abströmseitig eine Feinfaserspinnvlieslage angeordnet ist.

Als weitere Lagen, die ggf. noch mit im Verbund enthalten sein können, sind Papier, Vliesmaterial und/oder Nanofaserlagen zu nennen. Es ist dabei möglich, dass alle Lagen auch durchgängig durch die Ultraschallschweißverbindung miteinander verbunden sind.

## Patentansprüche

1. Filterbeutel für einen Staubsauger aus einem Filtermaterial umfassend mindestens drei Lagen, wobei mindestens zwei Lagen, die aus mindestens einer Vliesstofflage und mindestens einer Faservlieslage bestehen, durch eine Schweißverbindung verbunden sind, **dadurch gekennzeichnet, dass** die Vlisstofflage eine flächenbezogene Masse von mindestens 5 g/m² aufweist,
die Faservlieslage Filamente und/oder fibrillierte Folienfasern (Splitfasern) und/oder Crimpfasern umfasst, wobei alle Fasern der Faservlieslage ungeladen sind und eine flächenbezogene Masse zwischen 10 und 200 g/cm² aufweist und dass der Pressflächenanteil des Schweißmusters maximal 5 % der Oberfläche der durchströmbaren Fläche des Filterbeutels beträgt und dass, bezogen auf die gesamte durchströmbare Fläche des Filterbeutels, durchschnittlich mindestens 20 Schweißverbindungen pro 10 cm² vorhanden sind, wobei die Schweißverbindungen linienförmig ausgebildet sind.

2. Filterbeutel nach Anspruch 1,
**dadurch gekennzeichnet, dass** durchschnittlich mindestens 25 Schweißverbindungen pro 10 cm² vorhanden sind.

3. Filterbeutel nach Anspruch 2,
**dadurch gekennzeichnet, dass** mindestens 50 Schweißverbindungen vorhanden sind.

4. Filterbeutel nach mindestens einem der Ansprüche 1 bis 3,
**dadurch gekennzeichnet, dass** die Schweißverbindungen gleichmäßig über die durchströmbare Fläche des Filterbeutels verteilt sind.

5. Filterbeutel nach mindestens einem der Ansprüche 1 bis 3,
**dadurch gekennzeichnet, dass** die Schweißverbindung ungleichmäßig über die durchströmbare Fläche des Filterbeutels verteilt sind.

6. Filterbeutel nach mindestens einem der Ansprüche 1 bis 4,
**dadurch gekennzeichnet, dass** der Pressflächenanteil des Schweißmusters mindestens 2 %, besonders bevorzugt mindestens 3 %, beträgt.

7. Filterbeutel nach mindestens einem der Ansprüche 1 bis 6,
**dadurch gekennzeichnet, dass** die Splitfasern eine Länge zwischen 1 und 100 mm, bevorzugt zwischen 3 bis 70 mm, besitzen.

8. Filterbeutel nach einem der Ansprüche 1 bis 7,
**dadurch gekennzeichnet, dass** die Crimpfaser unterschiedliche räumliche Strukturen aufweist, bevorzugt vom Zickzack-, Wellen- und/oder Spiraltyp.

9. Filterbeutel nach Anspruch 8,
**dadurch gekennzeichnet, dass** die Crimpfaser eine mechanisch gecrimpte, eine Autocrimpfaser und/oder eine Bikomponentenfaser ist.

10. Filterbeutel nach mindestens einem der Ansprüche 1 bis 9,
**dadurch gekennzeichnet, dass** die Splitfasern und/oder Crimpfasern ausgewählt sind aus Naturfasern und/oder Chemiefasern.

11. Filterbeutel nach mindestens einem der Ansprüche 1 bis 10,
**dadurch gekennzeichnet, dass** die flächenbezogene Masse der Faservlieslage zwischen 20 bis 100 g/m², beträgt.

12. Filterbeutel nach mindestens einem der Ansprüche 1 bis 11,
**dadurch gekennzeichnet, dass** die Vliesstofflage ein Scrim, bevorzugt ein Spinnvlies oder eine Meltblownlage ist.

13. Filterbeutel nach mindestens einem der Ansprüche 1 bis 12,
**dadurch gekennzeichnet, dass** der Verbund aus zwei Vliesstofflagen, zwischen denen die Faservlieslage angeordnet ist, besteht.

14. Filterbeutel nach mindestens einem der Ansprüche 1 bis 12,
**dadurch gekennzeichnet, dass** der Verbund aus einer Vliesstofflage und einer Feinfaser-Spinnvlieslage, zwischen denen die Faservlieslage angeordnet ist, besteht.

15. Filterbeutel nach mindestens einem der Ansprüche 1 bis 14,
**dadurch gekennzeichnet, dass** der Verbund mindestens eine weitere Feinfaser-Spinnvlieslage umfasst.

16. Filterbeutel nach Anspruch 14 oder 15,
**dadurch gekennzeichnet, dass** die FeinfaserSpinnvlieslagen unterschiedliche Filtereigenschaften aufweisen.

17. Filterbeutel nach einem der Ansprüche 14 bis 16,
**dadurch gekennzeichnet, dass** abströmseitig eine Feinfaser-Spinnvlieslage angeordnet ist.

18. Filterbeutel nach mindestens einem der Ansprüche 1 bis 17,
**dadurch gekennzeichnet, dass** die weiteren Lagen aus Papier, Vliesmaterial und/oder Nanofasern gebildet sind.

19. Filterbeutel nach mindestens einem der Ansprüche 1 bis 18,
**dadurch gekennzeichnet, dass** alle Lagen durchgängig durch die Ultraschalschweißverbindung verbunden sind.

20. Filterbeutel nach mindestens einem der Ansprüche 1 bis 19,
**dadurch gekennzeichnet, dass** durch die Anordnung der Schweißverbindungen eine kissenartige Ausbildung vorliegt.

## Claims

1. Filter bag for a vacuum cleaner made of a filter material comprising at least three layers, at least two layers which comprise at least one nonwoven fabric layer and at least one nonwoven fibre layer being connected by a weld, **characterised in that**
the nonwoven fabric layer has a mass surface density of at least 5 g/m²,
the nonwoven fibre layer includes uncharged fibres, which are selected from filaments and/or fibrillated film fibres (split fibres) and/or crimp fibres, and the mass surface density is between 10 and 200 mg/m², and **in that** the compressed surface area proportion of the weld pattern is at most 5% of the surface of the permeable surface area of the filter bag and **in that**, relative to the total permeable surface area of the filter bag, on average at least 20 welds per 10 cm² are present, wherein the welds have linear configuration.

2. Filter bag according to claim 1,
**characterised in that** on average at least 25 welds per 10 cm² are present.

3. Filter bag according to claim 2,
**characterised in that** at least 50 welds are present.

4. Filter bag according to at least one of the claims 1 to 3,
**characterised in that** the welds are distributed uniformly over the permeable surface area of the filter bag.

5. Filter bag according to at least one of the claims 1 to 3,
**characterised in that** the welds are distributed non-uniformly over the permeable surface area of the filter bag.

6. Filter bag according to at least one of the claims 1 to 5,
**characterised in that** the compressed surface area proportion of the weld pattern is at least 2%, particularly preferred at least 3%.

7. Filter bag according to at least one of the claims 1 to 6,
**characterised in that** the split fibres have a length between 1 and 100 mm, preferably between 3 to 70 mm.

8. Filter bag according to at least one of the claims 1 to 7,
**characterised in that** the crimped fibre has different spatial structures, preferably of the zig-zag, undulating and/or spiral type.

9. Filter bag according to claim 8,
**characterised in that** the crimped fibre is a mechanically crimped, an autocrimped fibre and/or a bicomponent fibre.

10. Filter bag according to at least one of the claims 1 to 9,
**characterised in that** the split fibre and/or crimp fibre is selected from natural fibres and/or chemical fibres.

11. Filter bag according to at least one of the claims 1 to 10,
**characterised in that** the mass surface density of the nonwoven fibre layer is between 20 to 100 g/m².

12. Filter bag according to at least one of the claims 1 to 11,
**characterised in that** the nonwoven fabric layer is a scrim, preferably a spunbond or a meltblown layer.

13. Filter bag according to at least one of the claims 1 to 12,
**characterised in that** the composite comprises two nonwoven fabric layers between which the nonwoven fibre layer is disposed.

14. Filter bag according to at least one of the claims 1 to 12,
**characterised in that** the composite comprises a nonwoven fabric layer and a fine fibre spunbond layer between which the nonwoven fibre layer is disposed.

15. Filter bag according to at least one of the claims 1 to 14,
**characterised in that** the composite comprises at least one further fine fibre spunbond layer.

16. Filter bag according to claim 14 or 15,
**characterised in that** the fine fibre spunbond layers have different filter properties.

17. Filter bag according to one of the claims 14 to 16,
**characterised in that** a fine fibre spunbond layer is disposed downstream.

18. Filter bag according to at least one of the claims 1 to 17,
**characterised in that** the further layers are formed from paper, nonwoven material and/or nanofibres.

19. Filter bag according to at least one of the claims 1 to 18,
**characterised in that** all the layers are connected continuously by the ultrasonic weld.

20. Filter bag according to at least one of the claims 1 to 19,
**characterised in that** a cushion-like configuration is present due to the arrangement of the welds.

## Revendications

1. Sac filtrant pour aspirateur se composant d'un matériau filtrant comportant au moins trois couches, dans lequel au moins deux couches, constituées d'au moins une couche de non-tissé et d'au moins une couche de non-tissé fibreux, sont reliées par une soudure, **caractérisé en ce que** la couche de non-tissé présente une masse rapportée à la surface d'au moins 5 g/m²,
**en ce que** la couche de non-tissé fibreux comporte des filaments et/ou des fibres de film fibrillées (fibres coupées) et/ou des fibres crêpées, sachant que toutes les fibres de la couche de non-tissé fibreux sont non chargées, et présente une masse rapportée à la surface comprise entre 10 et 200 g/cm², et **en ce que** le pourcentage de surface de pressage du modèle de soudure s'élève à maximum 5 % de la surface du sac filtrant pouvant être traversée, et **en ce qu'**en moyenne au moins 20 soudures sont présentes pour 10 cm², par rapport à la surface totale du sac filtrant pouvant être traversée, sachant que les soudures sont réalisées de manière à présenter la forme de lignes.

2. Sac filtrant selon la revendication 1,
**caractérisé en ce qu'**en moyenne au moins 25 soudures sont présentes pour 10 cm².

3. Sac filtrant selon la revendication 2,
**caractérisé en ce qu'**au moins 50 soudures sont présentes.

4. Sac filtrant selon au moins l'une quelconque des revendications 1 à 3,
**caractérisé en ce que** les soudures sont réparties de matière égale sur la surface du sac filtrant pouvant être traversée.

5. Sac filtrant selon au moins l'une quelconque des revendications 1 à 3,
**caractérisé en ce que** les soudures sont réparties de manière inégale sur la surface du sac filtrant pouvant être traversée.

6. Sac filtrant selon au moins l'une quelconque des revendications 1 à 4,
**caractérisé en ce que** le pourcentage de surface de pressage du modèle de soudure s'élève à au moins 2 %, en particulier de préférence à au moins 3 %.

7. Sac filtrant selon au moins l'une quelconque des revendications 1 à 6,
**caractérisé en ce que** les fibres coupées présentent une longueur comprise entre 1 et 100 mm, de préférence entre 3 et 70 mm.

8. Sac filtrant selon l'une quelconque des revendications 1 à 7, **caractérisé en ce que** les fibres crêpées présentent différentes structures spatiales, de préférence une forme en zigzag, ondulée et/ou spiralée.

9. Sac filtrant selon la revendication 8,
**caractérisé en ce que** la fibre crêpée est une fibre crêpée mécaniquement, une fibre autocrêpée et/ou une fibre à deux composants.

10. Sac filtrant selon au moins l'une quelconque des revendications 1 à 9,
**caractérisé en ce que** les fibres coupées et/ou les fibres crêpées sont choisies parmi les fibres naturelles et/ou les fibres artificielles.

11. Sac filtrant selon au moins l'une quelconque des revendications 1 à 10,
**caractérisé en ce que** la masse rapportée à la surface de la couche de non-tissé fibreux est comprise entre 20 et 100 g/m².

12. Sac filtrant selon au moins l'une quelconque des revendications 1 à 11,
**caractérisé en ce que** la couche de non-tissé est une mousseline, de préférence une couche de filé-lié ou une couche soufflée en fusion.

13. Sac filtrant selon au moins l'une quelconque des revendications 1 à 12,
**caractérisé en ce que** le composite se compose d'au moins deux couches de non-tissé, entre lesquelles est disposée la couche de non-tissé fibreux.

14. Sac filtrant selon au moins l'une quelconque des revendications 1 à 12,
**caractérisé en ce que** le composite se compose d'une couche de non-tissé et d'une couche de filé-lié à fibres fines, entre lesquelles est disposée la couche de non-tissé fibreux.

15. Sac filtrant selon au moins l'une quelconque des revendications 1 à 14,
**caractérisé en ce que** le composite comporte au moins une autre couche de filé-lié à fibres fines.

16. Sac filtrant selon la revendication 14 ou 15,
**caractérisé en ce que** les couches de filé-lié à fibres fines présentent diverses propriétés de filtrage.

17. Sac filtrant selon l'une quelconque des revendications 14 à 16, **caractérisé en ce qu'**une couche de filé-lié à fibres fines est disposée du côté sortie de flux.

18. Sac filtrant selon au moins l'une quelconque des revendications 1 à 17,
**caractérisé en ce que** les autres couches sont formées à partir de papier, d'un matériau textile et/ou de nanofibres.

19. Sac filtrant selon au moins l'une quelconque des revendications 1 à 18,
**caractérisé en ce que** toutes les couches sont reliées en continu par une soudure par ultra-sons.

20. Sac filtrant selon au moins l'une quelconque des revendications 1 à 19,
**caractérisé en ce qu'**une réalisation en forme de coussin est obtenue en raison de l'agencement des soudures.
